# EUROPEAN PATENT SPECIFICATION

(11) **EP 3 238 983 B1**
(45) Date of publication and mention of the grant of the patent: **03.07.2019**
(21) Application number: 15873051.5
(22) Date of filing: 22.12.2015
(51) Int. Cl.: B60N 2/00, B60N 2/70

(54) **SEATING DETECTION DEVICE**
SITZDETEKTIONSVORRICHTUNG
DISPOSITIF DE DÉTECTION D'OCCUPATION DE SIÈGE

(30) Priority: 24.12.2014 JP 2014260977
(43) Date of publication of application: 01.11.2017
(73) Proprietor: Aisin Seiki Kabushiki Kaisha, Kariya-shi, Aichi 448-8650 (JP)
(72) Inventor: KITO, Kosuke, Kariya-shi Aichi 448-8650 (JP); YANAI, Keiichi, Kariya-shi Aichi 448-8650 (JP)
(74) Representative: TBK
(86) International application number: PCT/JP2015/085784
(87) International publication number: WO 2016/104483

(56) References cited:
- WO-A1-2013/178485
- WO-A1-2013/178486
- CN-U- 203 623 597
- JP-A- H09 240 424
- JP-A- 2011 105 277
- JP-A- 2011 105 278
- JP-U- S4 998 763

## Description

### TECHNICAL FIELD

The present invention relates to a seating detection device according to the preamble of claim 1.

### BACKGROUND ART

A seating detection device for a vehicle generally detects the seating of a vehicle occupant on a seat with a pressure-sensitive switch located below a cushion pad. Patent document 1 describes an example of a seating detection device including a pressure-sensitive switch accommodated in a groove formed in a lower surface of a cushion pad. This allows the load on the seat to be transmitted to the pressure-sensitive switch in a concentrated manner and allows a constant initial gap (clearance) to be formed between the pressure-sensitive switch and the cushion pad. Thus, for example, erroneous detections that occur such as when reacting to baggage on a seat are reduced. This allows the seating detection to be accurately performed. Patent document 2 shows a generic seating detection device having the features of the preamble of claim 1. Further seating detection devices are shown by Patent document 3 and by Patent document 4, respectively.

### PRIOR ART DOCUMENT

### PATENT DOCUMENT

Patent Document 1: JP 5 243 639 B1
Patent Document 2: WO 2013/178485 A1
Patent Document 3: JP S49 98763 U
Patent Document 4: CN 203 623 597 U

### SUMMARY OF THE INVENTION

### PROBLEMS THAT ARE TO BE SOLVED BY THE INVENTION

In order to keep the clearance between the pressure-sensitive switch and the cushion pad constant, dimensional errors and assembling errors of the cushion pad caused by thermal expansion and contraction need to be strictly managed. This results in complicated work that increases manufacturing costs.

It is an object of the present invention to provide a seating detection device that easily and accurately performs seating detection.

### MEANS FOR SOLVING THE PROBLEM

The object is achieved by a seating detection device having the features of claim 1. Further advantageous developments of the invention are set out in the dependent claims. A seating detection device that solves the above problem includes a sensor holder located below a cushion pad, a pressure-sensitive switch held by the sensor holder, and a pressing element that is elastically supported by the sensor holder. The pressing element presses the pressure-sensitive switch with a seat load transmitted through the cushion pad.

### BRIEF DESCRIPTION OF THE DRAWINGS

Fig. 1 is a schematic view showing a seating detection device arranged in a vehicle seat.
Fig. 2 is a diagram showing a seating sensor located below a cushion pad.
Fig. 3 is a perspective view showing a first embodiment of a seating sensor.
Fig. 4 is a front view showing the seating sensor of the first embodiment.
Fig. 5 is a plan view showing the seating sensor of the first embodiment.
Fig. 6 is a side view showing the seating sensor of the first embodiment.
Fig. 7 is a cross-sectional view showing a membrane switch.
Fig. 8A is a diagram showing a state in which baggage is placed on the seating sensor in the first embodiment.
Fig. 8B is a diagram showing a state in which a vehicle occupant is seated on the seating sensor in the first embodiment.
Fig. 9 is a perspective view showing a comparative example, which is useful for understanding the invention, of a seating sensor.
Fig. 10 is a front view showing the seating sensor of the comparative example.
Fig. 11 is a plan view showing the seating sensor of the comparative example.
Fig. 12 is a diagram showing a state in which a vehicle occupant is seated on the seating sensor in the comparative example.
Fig. 13 is a diagram showing a state in which baggage is placed on the seating sensor in the comparative example.
Fig. 14A is a cross-sectional view showing another example of a seating sensor corresponding to the cross section taken along line XIV-XIV in Fig. 5.
Fig. 14B is an enlarged view of the encircled portion shown in Fig. 14A.

### EMBODIMENTS OF THE INVENTION

### First Embodiment

A first embodiment of a seating detection device arranged in a vehicle seat will now be described with reference to the drawings.

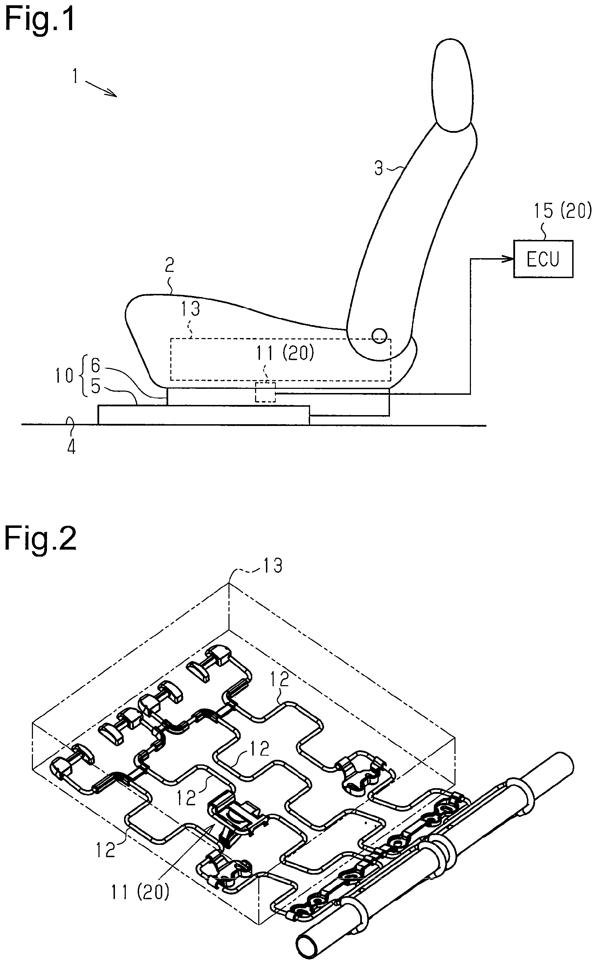

As shown in Fig. 1, a vehicle seat 1 includes a seat cushion 2 and a seat back 3 arranged at a rear end of the seat cushion 2 in an inclinable manner. In the present embodiment, left and right lower rails 5 extending in the front-to-rear direction of the vehicle are arranged on a vehicle floor 4. An upper rail 6 attached to each lower rail 5 is movable relative to the lower rail 5 in the extending direction of the lower rail 5. The seat 1 is supported above a seat sliding device 10 formed by the lower rails 5 and the upper rails 6.

The seat cushion 2 includes a pressure-sensitive seating sensor 11. More specifically, as shown in Fig. 2, the seat cushion 2 includes cushion springs 12 and a cushion pad 13 supported on the cushion springs 12. The seating sensor 11 is fixed to the cushion springs 12 and located below the cushion pad 13. An output signal of the seating sensor 11 is input to an ECU 15 (refer to Fig. 1). A seating detection device 20 includes the seating sensor 11 and the ECU 15 and is capable of detecting the seating of a vehicle occupant on the seat 1.

The cushion pad 13 of the present embodiment is formed from, for example, a sponge material such as urethane foam. Each cushion spring 12 is an "S-shaped spring," which is continuously bent into S-shapes. The mounting position of the seating sensor 11 is optimized based on the evaluation and analysis of how load is transmitted in the seat 1. This allows the seating detection device 20 to properly perform vehicle occupant detection with the single seating sensor 11.

### Seating Sensor

The structure of the seating sensor 11 of the present embodiment will now be described.

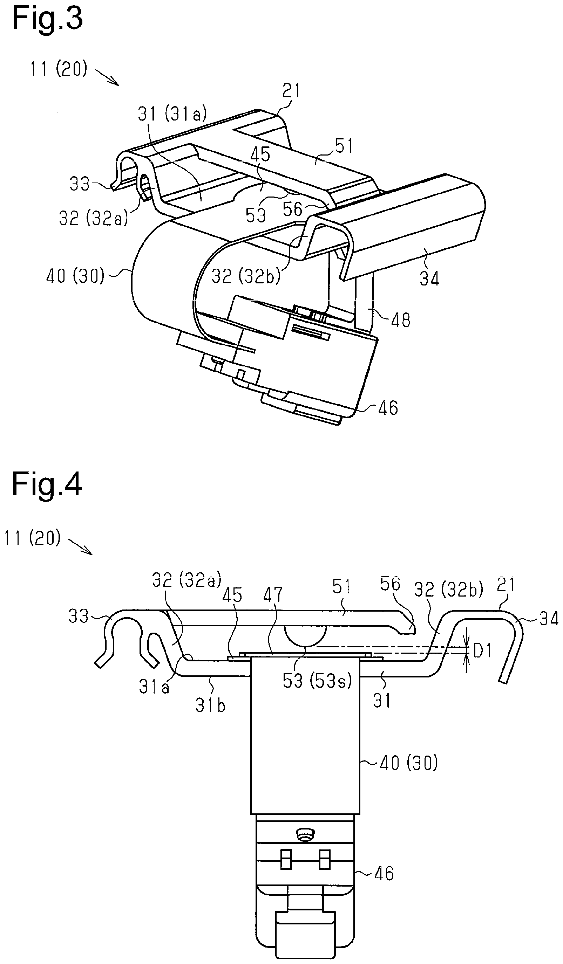

As shown in Figs. 3 to 6, the seating sensor 11 includes a sensor holder 21 fixed to the cushion springs 12 and a pressure-sensitive switch 30 held by the sensor holder 21.

The sensor holder 21 includes a holding base 31, which has the form of a rectangular plate, and two opposing side walls 32 (first side wall 32a and second side wall 32b) projecting from two opposite ends of the holding base 31. The first side wall 32a located at the left side in Fig. 4 includes a distal portion having a fitting portion 33 fitted to a cushion spring 12. The second side wall 32b located at the right side in Fig. 4 includes a distal portion having a hooking portion 34 hooked to a cushion spring 12.

The sensor holder 21 is formed from a resin. The fitting portion 33 is located at a side (left side in Fig. 4) of the first side wall 32a and has a U-shaped cross section that opens at the side corresponding to a basal end of the first side wall 32a (lower side in Fig. 4). The hooking portion 34 has the form of a hook. More specifically, the hooking portion 34 is extended sideward from a distal end of the second side wall 32b, that is, toward a side opposite to the first side wall 32a (right side in Fig. 4), and bent toward the side corresponding to a basal end of the second side wall 32b (lower side in Fig. 4). The sensor holder 21 is fixed to the corresponding continuously S-shaped cushion spring 12 (refer to Fig. 2) by hooking the hooking portion 34 and fitting, or snap-fitting with the resin elasticity, the fitting portion 33 to the cushion spring 12 from above.

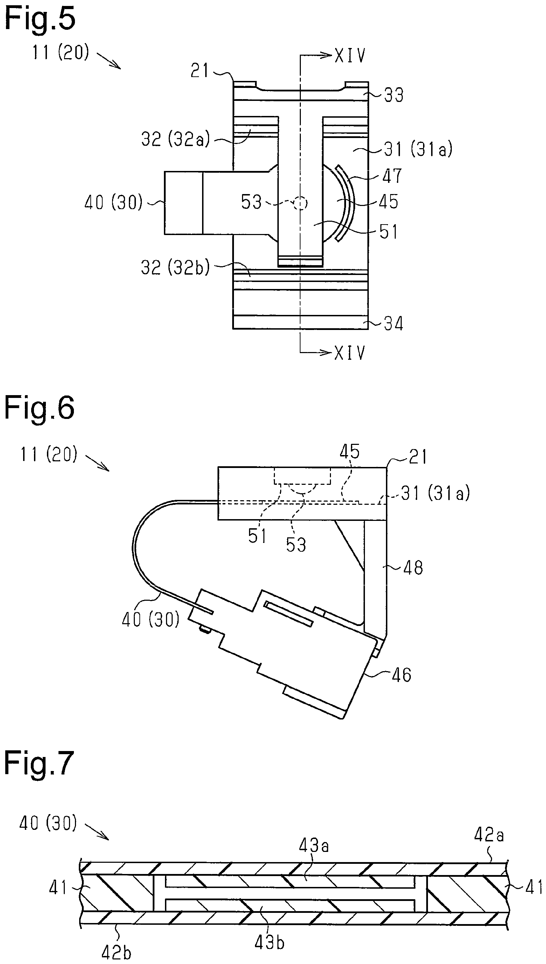

The pressure-sensitive switch 30 is a membrane switch 40 having a membranous contact switch structure that is shown in Fig. 7. The membrane switch 40 includes two laminated contact sheets 42a and 42b and an insulative spacer 41 arranged between the two contact sheets 42a and 42b. The contact sheets 42a and 42b include opposing contacts 43a and 43b, respectively. The two contact sheets 42a and 42b are adhered to the spacer 41. Each of the contact sheets 42a and 42b is formed by printing a circuit pattern on a resin film with conductive ink. The membrane switch 40 is configured to go "on" when elastic deformation of the contact sheets 42a and 42b result in the opposing contacts 43a and 43b contacting each other.

More specifically, as shown in Figs. 3 to 6, the membrane switch 40 of the present embodiment has an elongated shape and includes one end having a switch unit 45 that incorporates the contacts 43a and 43b. The switch unit 45 is circular. The membrane switch 40 includes another end connected to a sensor connector 46.

The membrane switch 40 is held by the sensor holder 21 with the switch unit 45 adhered to the holding base 31 of the sensor holder 21. More specifically, the sensor holder 21 is configured so that the switch unit 45 is adhered to an upper surface 31a of the holding base 31, from which the two side walls 32 project. The upper surface 31a of the holding base 31 includes a positioning portion 47 having an arcuate wall structure that corresponds to the circular shape of the switch unit 45. Further, the sensor holder 21 includes a post 48 extending downward from a lower surface 31b of the holding base 31 as viewed in Fig. 6. When the sensor connector 46, which is connected to the end of the membrane switch 40 opposite to the switch unit 45, is engaged with the post 48, the membrane switch 40 is bent in an arcuate manner and held by the sensor holder 21.

The arrangement of the sensor connector 46 directly below the switch unit 45 reduces the size of the seating sensor 11 in the present embodiment. Further, when the sensor connector 46 is engaged with the post 48 of the sensor holder 21, a connection end

(right end in Fig. 6) of the sensor connector 46 is directed diagonally downward. This reduces the load on the membrane switch 40 that is held in a curved state.

The sensor holder 21 includes a cantilever beam 51, which has the form of an elongated plate, extending from the first side wall 32a of the sensor holder 21. The cantilever beam 51, which serves as a support, includes a basal end (fixed end) supported by the first side wall 32a and is opposed to the upper surface 31a of the holding base 31. The cantilever beam 51 includes a pressing element 53 that projects toward the switch unit 45, which is adhered to the holding base 31.

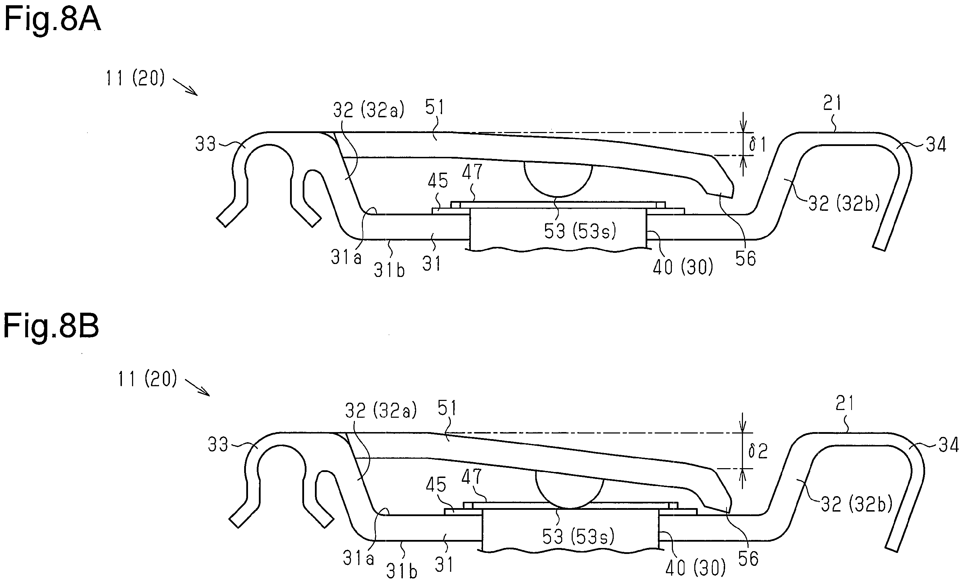

In detail, as shown in Figs. 8A and 8B, the pressing element 53 of the present embodiment includes a pressing surface 53s, which is generally semi-spherical, that is, curved. The cantilever beam 51, which is elastic and flexible, downwardly bends when pressed down by the cushion pad 13, which is located above the cantilever beam 51. That is, the seat load transmitted through the cushion pad 13 elastically deforms the cantilever beam 51 and moves the pressing element 53 toward the switch unit 45, which is adhered to the holding base 31. When the pressing element 53 presses the switch unit 45, the seating sensor 11 detects the seating of a vehicle occupant on the seat 1.

In further detail, as shown in Fig. 4, a predetermined initial gap (clearance) D1 is set between the switch unit 45 and the pressing element 53, which is supported by the cantilever beam 51. Thus, as shown in Fig. 8A, the pressing element 53 does not reach the switch unit 45 when the cantilever beam 51 is bent by a bending amount δ1 corresponding to seat load that is produced when baggage is placed on the seat 1. As shown in Fig. 8B, the pressing element 53 is configured to press the switch unit 45 when the cantilever beam 51 is bent by a bending amount δ2 corresponding to seat load that is produced when a vehicle occupant is seated on the seat 1.

The cantilever beam 51 includes a distal end (free end) with a stopper 56 (lower side in Fig. 8) that projects toward the holding base 31 in the same manner as the pressing element 53. The seating sensor 11 of the present embodiment is configured so that the abutment of the stopper 56 against the upper surface 31a of the holding base 31 restricts the bending amount of the cantilever beam 51, that is, the movement amount in which the pressing element 53 moves toward the switch unit 45.

The present embodiment has the advantages described below.
(1) The seating sensor 11 includes the sensor holder 21 located below the cushion pad 13 and the pressure-sensitive switch 30 held by the sensor holder 21. Further, the seating sensor 11 includes the pressing element 53 that is elastically supported by the sensor holder 21. The seating sensor 11 is configured so that the pressing element 53 presses the pressure-sensitive switch 30 with the seat load transmitted through the cushion pad 13, which is located above the seating sensor 11.
   Regardless of the shape and dimensions of the cushion pad 13 located above the pressure-sensitive switch 30, the above structure allows for accurate activation of the pressure-sensitive switch 30 with the seat load produced when a vehicle occupant is seated. This eliminates the need for, for example, processing a lower surface of a cushion pad (for example, groove formation) like in the prior art. This further reduces the influence of dimensional errors and assembling errors of the cushion pad 13 caused by, for example, thermal expansion and contraction. Thus, manufacturing and assembling management of the cushion pad 13 are facilitated. As a result, seating detection is easily and accurately performed.
   In addition, the pressing of the pressure-sensitive switch 30 is further ensured, and there is no need for an elastic body serving as a receiving member (underlying member) that receives a switch unit like in the prior art. This eliminates problems that would result from the arrangement of a receiving member, that is, the influence of dimensional errors (including errors caused by thermal expansion and contraction) and assembling errors. As a result, seating detection is easily and accurately performed.
(2) The sensor holder 21 includes the cantilever beam 51 with the basal end supported by the first side wall 32a of the sensor holder 21. Further, the cantilever beam 51 opposes the upper surface 31a of the holding base 31. The cantilever beam 51 is flexible and downwardly bends when pressed down by the cushion pad 13. That is, the distal end of the cantilever beam 51 moves toward the upper surface 31a of the holding base 31. The pressing element 53 is supported by the cantilever beam 51.
   The above structure allows the pressing element 53 to be stably supported in a simplified manner spaced apart by the predetermined clearance from the switch unit 45. When the rate of the bending amount (elastic deformation ratio) that is in accordance with the load input is set in a manner suitable for the cantilever beam 51 that serves as a support, the pressure-sensitive switch 30 is accurately activated by the seat load produced when a vehicle occupant is seated. Thus, seating detection is easily and accurately performed.
(3) The membrane switch 40 is used as the pressure-sensitive switch 30. This reduces the weight and facilitates coupling tasks. Further, the freedom of layout for the pressure-sensitive switch 30 is increased. This reduces the pressure-sensitive switch 30 in size.
(4) The pressing element 53 includes the pressing surface 53s that is generally semi-spherical and curved projecting toward the pressure-sensitive switch 30. This reduces the contact area so that the pressure-sensitive switch 30 is pressed in a concentrated manner. In other words, the pressing element 53 presses the pressure-sensitive switch 30 at a single point having a small contact area. This further ensures activation of the pressure-sensitive switch 30. In particular, the advantage becomes further prominent when using the pressure-sensitive switch 30 including the switch unit 45 that has the form of a thin film (thin plate), such as the membrane switch 40. This limits damage to a contact surface (pressed surface) of the pressure-sensitive switch 30. Thus, high reliability is ensured.
(5) The distal end of the cantilever beam 51 includes the stopper 56 that serves as a movement restriction mechanism. The abutment of the stopper 56 against the sensor holder 21 (upper surface 31a of the holding base 31) restricts the movement amount of the pressing element 53 toward the pressure-sensitive switch 30.

In the above structure, excessive pressing force is not applied to the pressure-sensitive switch 30. This ensures high reliability.

### Comparative Example

A comparative example of a seating detection device will now be described with reference to the drawings. To facilitate understanding, like or same reference numerals are given to those components that are the same as the corresponding components of the first embodiment. Such components will not be described in detail.

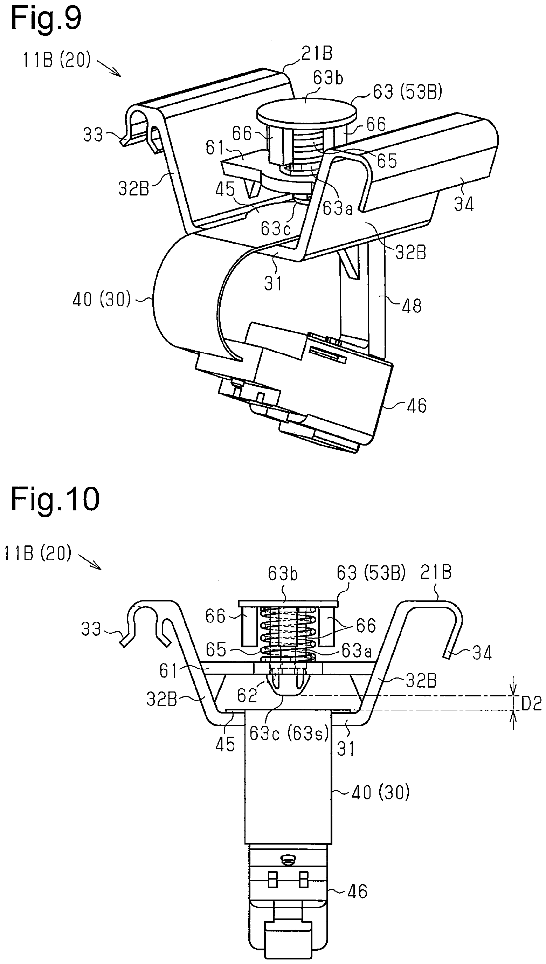

As shown in Figs. 9 to 11, a seating sensor 11B of the comparative example differs from the first embodiment in the structure of a pressing element 53B and a support.

In detail, a sensor holder 21B includes a support 61 extending between two side walls 32B. In further detail, the support 61 has the form of a flat plate opposing the holding base 31 of the sensor holder 21B, to which the switch unit 45 of the membrane switch 40 is adhered. The support 61 is not flexible and thus differs from the cantilever beam 51 of the first embodiment. The support 61 includes a through hole 62 extending through the support 61 in the vertical direction (thickness-wise direction) with the sensor holder 21B located below the cushion pad 13 (refer to Fig. 2). The seating sensor 11B includes a load pressure element 63 (pressing element) supported by the sensor holder 21B so as to be movable in the vertical direction with a shaft 63a inserted through the through hole 62.

The load pressure element 63 includes one end (upper side in Fig. 10) defining a circular pressure-receiving portion 63b that receives the pressing force of the cushion pad 13, which is located above the load pressure element 63. The load pressure element 63 includes another end (lower side in Fig. 10) defining a pressing portion 63c that opposes the switch unit 45 adhered to the holding base 31 of the sensor holder 21B. The seating sensor 11B includes a compression coil spring 65 serving as a biasing member located between the pressure-receiving portion 63b of the load pressure element 63 and the support 61 of the sensor holder 21B.

The elastic force of the compression coil spring 65 biases the load pressure element 63 away from the switch unit 45, which is located below the load pressure element 63. The compression coil spring 65 is fitted to the shaft 63a of the load pressure element 63 and located between the pressure-receiving portion 63b and the support 61, which are opposed to each other. Thus, the load pressure element 63 that is elastically supported above the membrane switch 40 (more specifically, switch unit 45) functions as the pressing element 53B.

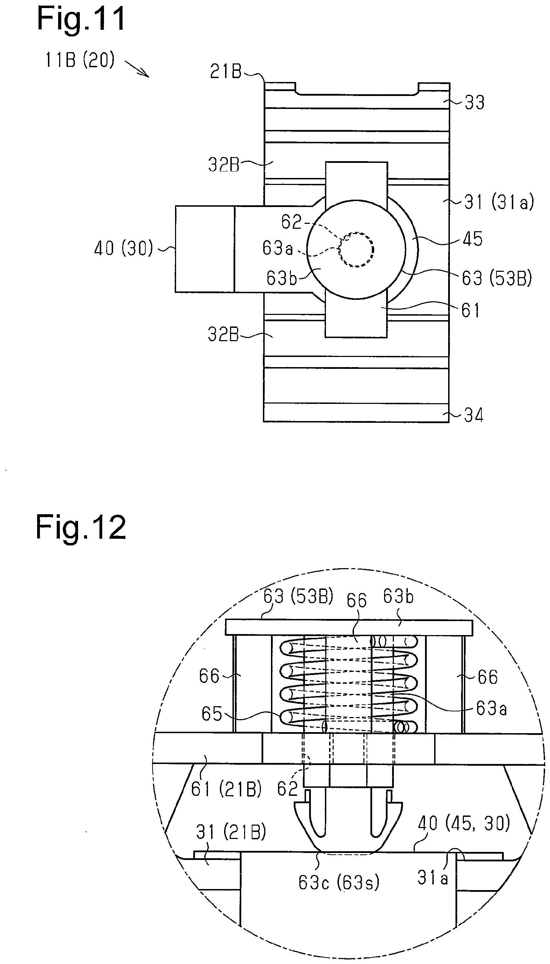

In further detail, as shown in Fig. 10, a predetermined initial gap (clearance) D2 is set between the switch unit 45 of the membrane switch 40 and the pressing portion 63c of the load pressure element 63. Referring to Fig. 12, elastic support force (spring constant) of the compression coil spring 65 is set so that the pressing portion 63c of the load pressure element 63 presses the switch unit 45 of the membrane switch 40 when a seat load that would be produced when a vehicle occupant is seated is applied to the pressure-receiving portion 63b of the load pressure element 63 through the cushion pad 13.

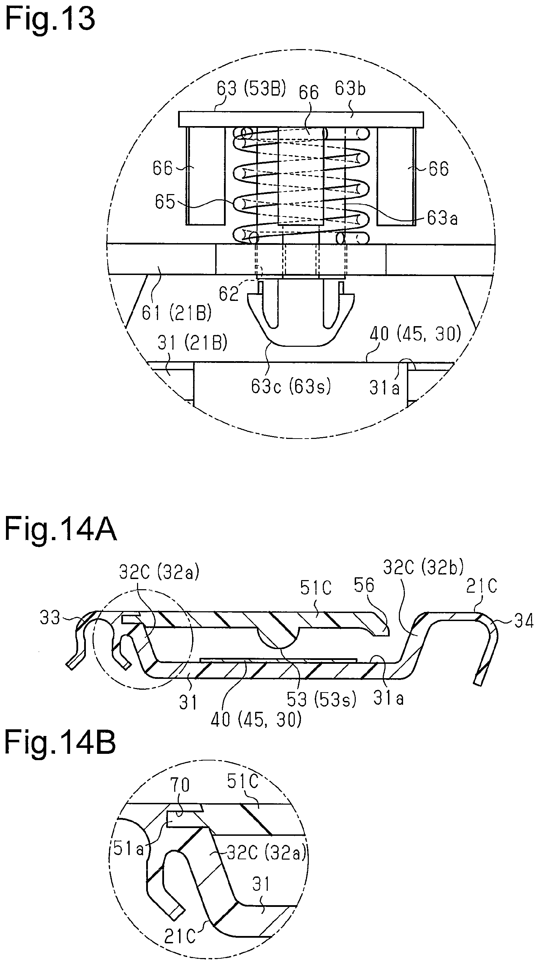

In other words, when the load pressure element 63 of the pressing element 53B is pressed down by the cushion pad 13 that is located above the load pressure element 63, the load pressure element 63 compresses the compression coil spring 65 and moves downwardly. That is, the pressing portion 63c moves toward the switch unit 45 of the membrane switch 40. However, as shown in Fig. 13, seat load produced when baggage is placed on the seat 1 is not enough for the pressing portion 63c to reach the switch unit 45. This allows the seating sensor 11B to easily and accurately perform seating detection.

The pressure-receiving portion 63b of the load pressure element 63 includes a plurality of stoppers 66 extending downwardly. The abutment of the stoppers 66 against the support 61 of the sensor holder 21B, which is located below the stoppers 66, restricts the downward movement amount of the load pressure element 63, that is, the amount over which the pressing portion 63c of the load pressure element 63 moves toward the switch unit 45. Thus, the seating sensor 11B is configured so that excessive pressing force is not applied to the switch unit 45.

The pressing portion 63c of the load pressure element 63 includes a pressing surface 63s that is curved projecting toward the switch unit 45. More specifically, the pressing surface 63s is curved so that the pressing portion 63c comes into linear contact with the switch unit 45. This allows the pressing portion 63c to reduce the contact area and press the switch unit 45 in a concentrated manner.

Accordingly, the seating sensor 11B of the comparative example has the same advantages as the seating sensor 11 of the first embodiment. Further, the elastic support force for the load pressure element 63 is easily changed by just replacing the compression coil spring 65. This ensures high versatility that is applicable to various seats.

The first embodiment and the comparative example may be modified as follows.

In the first embodiment and the comparative example, the seating sensor 11 (11B) is fixed to the cushion springs 12 that are located below the cushion pad 13, and the single seating sensor 11 is used to detect a vehicle occupant seated on the seat 1.

However, the number, arrangement, fixing subject, and the like of the seating sensor 11 may be changed. For example, seating detection may be performed by a plurality of seating sensors 11. The fixing subject of the seating sensor 11 does not necessarily have to be the cushion spring 12 and may be, for example, a seat pan or a supporting member of the cushion pad 13.

Further, the structure for fixing the sensor holder 21 (21B) to the cushion springs 12 may be changed. That is, in the first embodiment and the comparative example, the hooking portion 34 of the sensor holder 21 is hooked to the cushion springs 12, and the fitting portion 33 is fitted to the cushion springs 12. The sensor holder 21 is fixed to the cushion springs 12 by snap-fitting with the resin elasticity.

However, other fixing methods such as fastening may be used. In addition, the number of fixed points may be changed. In this case, there is a need for only at least one fixed point having a strong fixing structure (coupling structure) such as the fitting portion 33 of the first embodiment and the comparative example. Other fixed points may have a weak fixing structure like the hooking portion 34 so as not to obstruct smooth elastic deformation of the cushion springs 12. Further, when fixing the fitting portion 33 and the hooking portion 34 of the sensor holder 21 to two substantially parallel portions (refer to Fig. 2) such as when fixing the sensor holder 21 to the continuously S-shaped cushion springs 12 like in the first embodiment and the comparative example (refer to Fig. 2), a displacement prevention structure such as an engagement portion is provided to limit parallel movement of the sensor holder 21. The sensor holder 21 may be fixed to an L-shaped portion of the cushion spring 12, which is continuously S-shaped.

Additionally, the structure of the seating sensor 11 may be changed as long as the seating sensor 11 includes the pressure-sensitive switch 30 that is held by the sensor holder 21 (21B) and the pressing element 53 (53B) that is elastically supported by the sensor holder 21 to press the pressure-sensitive switch 30 with the seat load transmitted through the cushion pad 13.

More specifically, in the first embodiment and the comparative example, the membrane switch 40 is used as the pressure-sensitive switch 30. Instead, for example, a pressure-sensitive switch in which a harness extends from a switch unit may be used. Further, the switch unit, including the membrane switch 40, may have any number of contacts. When the membrane switch 40 is used, a wire breakage detection function may be added by using, for example, resistor ink.

In the first embodiment and the comparative example, the sensor connector 46 connected to the end of the membrane switch 40 is engaged with the post 48 of the sensor holder 21 and held at the lower side of the sensor holder 21. Instead, the sensor holder 21 may be integrally formed with the sensor connector 46. The sensor connector 46 may output a signal through wireless communication.

In the first embodiment, the cantilever beam 51 supported by the first side wall 32a functions as the support that supports the pressing element 53. However, as long as the support is configured to elastically support the pressing element 53 and elastically deform when pressed by the cushion pad 13 so that the pressing element 53 moves toward the pressure-sensitive switch 30, the support does not necessarily have to have a cantilever beam structure. The structure may be changed so that, for example, the support has a structure in which its two opposite ends are both supported.

The support (51, 61) may be separate from the sensor holder 21. For example, as shown in Figs. 14A and 14B, a cantilever beam 51C forming a support is separate from a sensor holder 21C. Further, a side wall 32C (32a) of the sensor holder 21C includes a fitting portion 70 (fitting recess). When a basal end 51a is fitted to the fitting portion 70, the cantilever beam 51C is fixed to the sensor holder 21C.

The cantilever beam 51C is coupled to the sensor holder 21C after coupling the membrane switch 40 to the sensor holder 21C. This allows the coupling task to be performed easily and efficiently. Further, the coupling of the fitting portion 70 to the sensor holder 21C facilitates the coupling of the cantilever beam 51C to the sensor holder 21C. In addition, when the support is flexible like in the cantilever beam 51C, the elastic support force for the pressing element 53 is easily changed just by replacing the support. This ensures high versatility that is applicable to various seats. Such a structure in which the support is separately formed is applicable to a non-flexible support such as the support 61 of the comparative example.

In the first embodiment, the pressing element 53 is generally semi-spherical and projects toward the pressure-sensitive switch 30. In the comparative example, the pressing element 53B is formed by the load pressure element 63, which includes the pressure-receiving portion 63b, and the pressing portion 63c located at the opposite sides of the shaft 63a. However, the form of the pressing element (53, 53B) may be changed. The same applies to a structure that does not include the pressing surface (53s, 63s), which is curved and projects toward the pressure-sensitive switch.

In the first embodiment, the distal end of the cantilever beam 51 functioning as the support includes the stopper 56 projecting toward the holding base 31 in the same manner as the pressing element 53. In the comparative example, the pressure-receiving portion 63b of the load pressure element 63 includes the stoppers 66 extending toward the support 61 of the sensor holder 21B. However, the structure of the movement restriction mechanism that restricts the movement amount of the pressing element 53 (53B) in which the pressing element 53 (53B) moves toward the pressure-sensitive switch 30 may be changed.

In the comparative example, the compression coil spring 65 is used as a biasing member. Instead, other spring members such as an extension coil spring and a leaf spring may be used as a biasing member. Alternatively, an elastic member other than a coil member may be used as a biasing member.

In the first embodiment and the comparative example, the switch unit 45 of the membrane switch 40 is adhered to the upper surface 31a of the holding base 31, which has the form of a rectangular plate. However, a holding surface that holds the pressure-sensitive switch 30 does not necessarily have to face the upper side. For example, the pressing element 53 supported by a distal end of a support having an L-shaped bent form may press the pressure-sensitive switch 30 that is located beside the pressing element 53.

## Claims

1. A seating detection device comprising:
a sensor holder (21; 21C) located below a cushion pad (13);
a pressure-sensitive switch (30) held by the sensor holder (21; 21C); and
a pressing element (53) that is elastically supported by the sensor holder (21; 21C), wherein
the pressing element (53) presses the pressure-sensitive switch (30) with a seat load transmitted through the cushion pad (13),
the sensor holder (21; 21C) includes a flexible support (51; 51C) that supports the pressing element (53), and
the support (51; 51C) is a cantilever beam including a basal end supported by the sensor holder (21; 21C), **characterized in that**
the support (51; 51C) is separate from the sensor holder (21; 21C), and **in that**
the sensor holder (21; 21C) includes a fitting portion (70) to which the support (51; 51C) is fitted.

2. The seating detection device according to claim 1, wherein the pressure-sensitive switch (30) is a membrane switch (40).

3. The seating detection device according to any one of claims 1 or 2, wherein the pressing element (53; 53B) includes a pressing surface (53s; 63s) that is curved to project toward the pressure-sensitive switch (30).

4. The seating detection device according to any one of claims 1 to 3, comprising a movement restriction mechanism (56; 66) that restricts a movement amount of the pressing element (53; 53B) in a direction in which the pressing element (53; 53B) moves toward the pressure-sensitive switch (30).

5. The seating detection device according to any one of claims 1 to 4, wherein the sensor holder (21; 21C) includes
a fitting portion (33) fitted to a cushion spring (12) located below the cushion pad (13), and
a hooking portion (34) hooked to the cushion spring.

## Patentansprüche

1. Sitzerfassungsvorrichtung, mit:
einem Sensorhalter (21; 21C), der unter einer Polsterauflage (13) angeordnet ist;
einem druckempfindlichen Schalter (30), der durch den Sensorhalter (21; 21C) gehalten ist; und
einem Presselement (53), das durch den Sensorhalter (21; 21C) elastisch gestützt ist, wobei
das Presselement (53) den druckempfindlichen Schalter (30) mit einer Sitzlast presst, die durch die Polsterauflage (13) übertragen wird,
der Sensorhalter (21; 21C) eine flexible Stütze (51; 51C) umfasst, die das Presselement (53) stützt, und
die Stütze (51; 51C) ein Freiträger ist, der ein Basisende umfasst, das durch den Sensorhalter (21; 21C) gestützt ist, **dadurch gekennzeichnet, dass**
die Stütze (51; 51C) von dem Sensorhalter (21; 21C) getrennt ist, und dass
der Sensorhalter (21; 21C) einen Einsetzabschnitt (70) umfasst, in den die Stütze (51; 51C) eingesetzt ist.

2. Sitzerfassungsvorrichtung nach Anspruch 1, wobei der druckempfindlichen Schalter (30) ein Membranschalter (40) ist.

3. Sitzerfassungsvorrichtung nach einem der Ansprüche 1 oder 2, wobei das Presselement (53; 53B) eine Pressfläche (53s; 63s) umfasst, die gekrümmt ist, um in Richtung des druckempfindlichen Schalters (30) vorzustehen.

4. Sitzerfassungsvorrichtung nach einem der Ansprüche 1 bis 3 mit einem Bewegungsbegrenzungsmechanismus (56; 66), der einen Bewegungsumfang des Presselements (53; 53B) in einer Richtung begrenzt, in der sich das Presselement (53; 53B) in Richtung des druckempfindlichen Schalters (30) bewegt.

5. Sitzerfassungsvorrichtung nach einem der Ansprüche 1 bis 4, wobei der Sensorhalter (21; 21C)
einen Einsetzabschnitt (33), der in eine Polsterfeder (12) eingesetzt ist, die unter der Polsterauflage (13) angeordnet ist, und
einen Hakenabschnitt (34) umfasst, der in die Polsterfeder eingehackt ist.

## Revendications

1. Dispositif de détection d'occupation de siège comprenant :
un porte-capteur (21 ; 21C) situé en dessous d'un rembourrage de coussin (13) ;
un commutateur sensible à la pression (30) maintenu par le porte-capteur (21 ; 21C) ; et
un élément de pression (53) qui est soutenu élastiquement par le porte-capteur (21 ; 21C), dans lequel
l'élément de pression (53) presse le commutateur sensible à la pression (30) avec une charge de siège transmise à travers le rembourrage de coussin (13),
le porte-capteur (21 ; 21C) inclut un support souple (51 ; 51C) qui soutient l'élément de pression (53), et
le support (51 ; 51C) est une poutre en porte-à-faux incluant une extrémité de base soutenue par le porte-capteur (21 ; 21C), **caractérisé en ce que**
le support (51 ; 51C) est distinct du porte-capteur (21 ; 21C), et **en ce que**
le porte-capteur (21 ; 21C) inclut une portion d'ajustement (70) à laquelle le support (51 ; 51C) est ajusté.

2. Dispositif de détection d'occupation de siège selon la revendication 1, dans lequel le commutateur sensible à la pression (30) est un commutateur à membrane (40).

3. Dispositif de détection d'occupation de siège selon l'une quelconque des revendications 1 ou 2, dans lequel l'élément de pression (53 ; 53B) inclut une surface de pression (53s ; 63s) qui est incurvée pour faire saillie vers le commutateur sensible à la pression (30).

4. Dispositif de détection d'occupation de siège selon l'une quelconque des revendications 1 à 3, comprenant un mécanisme de restriction de déplacement (56 ; 66) qui restreint une quantité de déplacement de l'élément de pression (53 ; 53B) dans un sens dans lequel l'élément de pression (53 ; 53B) se déplace vers le commutateur sensible à la pression (30).

5. Dispositif de détection d'occupation de siège selon l'une quelconque des revendications 1 à 4, dans lequel le porte-capteur (21 ; 21C) inclut
une portion d'ajustement (33) ajustée à un ressort de coussin (12) situé en dessous du rembourrage de coussin (13), et
une portion de crochetage (34) crochetée au ressort de coussin.
